# EUROPEAN PATENT SPECIFICATION

(11) **EP 4 014 749 B1**
(45) Date of publication and mention of the grant of the patent: **08.05.2024**
(21) Application number: 21151881.6
(22) Date of filing: 15.01.2021
(51) Int. Cl.: A23K 10/20, A23K 10/30, A23K 10/35, A23K 20/163, A23K 40/25, A23K 50/42

(54) **EDIBLE PET CHEW**
ESSBARER KAUARTIKEL FÜR HAUSTIERE
ALIMENT À MÂCHER COMESTIBLE POUR ANIMAUX DOMESTIQUES

(30) Priority: 18.12.2020 CN 202011509549
(43) Date of publication of application: 22.06.2022
(73) Proprietor: Chongqing Sweet Pet Products Co., Ltd., Chongqing 402160 (CN); Shanghai Sunlight Innov Trading Co., Ltd., Pudong District Shanghai 200127 (CN)
(72) Inventor: LI, Chunsheng, Chongqing, 402160 (CN); MAO, Xin, Chongqing, 402160 (CN); XU, Guangqiang, Shanghai, 200127 (CN); SHEN, Dequan, Shanghai, 200127 (CN)
(74) Representative: Manitz Finsterwald Patent- und Rechtsanwaltspartnerschaft mbB

(56) References cited:
- WO-A1-2018/124880
- US-A1- 2010 062 111
- US-A1- 2013 142 936
- US-A1- 2016 302 449

## Description

### CROSS REFERENCE OF RELATED APPLICATION

This is a non-provisional application that claims priority to Chinese application number 202011509549.5, filing date December 18, 2020.

### NOTICE OF COPYRIGHT

A portion of the disclosure of this patent document contains material which is subject to copyright protection. The copyright owner has no objection to any reproduction by anyone of the patent disclosure, as it appears in the United States Patent and Trademark Office patent files or records, but otherwise reserves all copyright rights whatsoever.

### BACKGROUND OF THE PRESENT INVENTION

### FIELD OF INVENTION

The field of the present invention relates to an edible pet chew. More particularly, the present invention relates to an edible pet chew including a cellular low density material member as a separate member and a high density tube or sheet member as a separate member, primarily for dogs, that is safe and entertaining, and satisfies their instinctive needs to chew.

### DESCRIPTION OF RELATED ARTS

Dogs as carnivorous animals, have inherent urge to chew things. Visiting to a pet store or supermarket makes it readily apparent that there is a wide selection of dog chew products created to accommodate their chewing activities. These products of this kind provide favorable benefits to dogs such as entertaining, exercising jaws, reducing plaque and tartar, freshening breathes and keeping them busy. Edible pet chews are chewed by pets for some time and then swallowed. Traditional rawhide chews and later rawhide alternative chews such as vegetable dental chews were introduced to market with great success widely welcome by dogs and their owners. It is noted that dog treats and dog chews that are addressed in the present invention are of dry feeding stuffs (dry feed) rather than moist feed such as wet treat or wet feed, with moisture content substantially less than 25%. Dog chews generally are referring to dry ones in all circumstances.

Of those vegetable dental chews, a kind of low density vegetable/plant based chews (they may also be called puffed/porous/cellular/foamed vegetable based chews) can be found in the market. Those vegetable based low density chews may present some benefits such as:
A), Improved plaque/tartar control function than regular high density extruded or injection processed vegetable based chews. Compared to regular vegetable based high density materials similarly formulated, vegetable based low density chews may be processed by extrusion with some specially modified shearing force parameters and modified extrusion screw profiles. After being processed in an extrusion machine system or an injection one under the modifications, finished products have numerous bubbles/blisters interspersed throughout their whole material body, which may result in an internal porosity structure. Generally speaking, vegetable based low density material is softer in rigidity/strength than high density ones. The qualities/properties/characteristics of porosity structure and soft rigidity enable an enlarged tooth contact area than the high density ones while being gnawed, thus an improved plaque/tartar reduction function is achieved.
B), Improved digestibility rate versus the high density ones.
C), More tooth-friendly to puppies and old dogs than the high density ones. With weak teeth, it's safer for puppies and old dogs to gnaw on these vegetable based low density chews with softer textures as dental chews.

However, these dental chews formed merely from vegetable based low density material may suffer with some drawbacks as described below.
A), The product has a rough surface due to the presence of bubbles/blisters, especially while applying plant starch based composite (such as pre-gelatinized starch based composite) to make it. The rough surface makes it not appealing to a lot of potential consumers. The rough/uneven/irregular surface, especially when the rough material exists externally visible to consumers, results in an aesthetically unappealing product.
B), The rough surface makes it unable to imitate traditional rawhide sheet appearance characteristic/property.
C), Not strong and not chewy. They are quite soft and can not take long time chewing activities.

Of those vegetable dental chews, a new kind of high density vegetable/plant based chews in SHEET or TUBE (pipe) form (especially in a sheet form which serve as a most popular rawhide alternative product) which is typically "free of animal hide ingredient" exist in the market to serve as alternatives to traditional rawhide sheet bones, being intended to overcome some drawbacks of traditional rawhide chews. Another new kind of products similar to these high density vegetable/plant based chews in SHEET/TUBE form are animal ingredient based high density chews in SHEET or TUBE form which includes animal ingredient(s) and less than 50% plant ingredient by weight in formula. As being widely understood, traditional rawhide chews may suffer from several drawbacks, such as the follows. A), Chunks of rawhide broken off during dog's chewing activity may bring a jeopardy of choke to him/her. B), Comparatively low digestibility rate. C), Many dogs find these pet chews lack of substantial flavor and scent. Accordingly, many dogs lose interest with these rawhide pet chews after a while and will at most only chew on them for short periods of time. D), Environmental pollution. It is concerned by many people that manufacture of rawhide is relatively unregulated industry. Producing the raw material of rawhide is known to use a bunch of chemicals and therefore generate evident pollution during its splitting, cleaning, washing and bleaching processes. The water system may also be harmed and polluted accordingly. E), Detrimental residues in rawhide from primary processing. When primarily processing rawhide, lime solution, NH4CL, H2O2, and NaOH may be used during its splitting, cleaning, washing and bleaching processes and may remain in some finished products more or less. These chemicals are not good for pets' health. For example, excessive H2O2 will cause pets vomit or even worse symptom. What's more, heavy metals, for example lead may also remain in the rawhide and accumulate in the body, which cause serious damage to the pets' health. These concerns encourage a perception for pets/dogs owners to look for alternative ways to provide a "pet chew" for their pets without the use of rawhide/porkhide material or animal hide ingredients.

These aforementioned plant based (or animal ingredient based) chews in a sheet/tube form are created to imitate the visual appearance/shape of traditional rawhide chews, as well as their chewing functions. "Smartbones" branded rawhide-free plant based chews in a sheet form distributed by Petmatrix, LLC company from USA are well recognized as a representative of this effort. Another example is "Milk-Bone" "GnawBones" brand rawhide-free chews distributed by Big Heart Pet Brands, Inc. (J.M. Smucker). These "GnawBones" have a tube form member plus a narrow sheet one which are assembled together to form a knotted bone configuration in an alternating layer relationship. Those sheet/tube formed vegetable based (or animal ingredient based) chews may present some benefits such as:
A), They can well imitate the appearance/shape and chewing function of traditional animal hide dog chews, especially the ones made of sheet form material. Comparing Sheet form materials and Tube/pipe form ones, it is understood by skilled persons in this industry that sheet formed ones can better achieve those imitation jobs than tube formed ones, where sheet form materials have extremely much more varieties in configurations in the intension to imitate traditional rawhide sheet chews since standard rawhide is in a similar sheet form as well, which makes "sheet form" an extremely more popular rawhide sheet alternative than "tube form". Tube form material can only do that imitation job in very limited varieties. These well-imitated characteristics enable these sheet/tube form products to work well as an alternative to traditional rawhide chews. These sheet or tube formed materials have smooth material surfaces resembling a traditional rawhide, which is much more welcome by consumers than a material with rough exterior surfaces.
B), They are chewy that can last for fairly long time as a dog chew before being swallowed, thanks to their good rigidity or strength characteristic. They provide good jaw exercising function. And the extended chewing time offers a longer entertaining time and a way to keep dogs busy longer.

However, these dental chews formed merely from sheet/tube structured vegetable based (or animal ingredient based) material suffer with some drawbacks as described below.
A), Unsatisfactory tartar/plaque control function. Firstly, the dogs may find these products do not satisfyingly reduce their tartar/plaque due to their chewy characteristic /property and fairly smooth surface. Secondly, these vegetable based (or animal ingredient based) high density chewy sheet/tube usually are very thin in thickness (with an intention to mimic traditional rawhide sheet), creating a problem that dog teeth do not penetrate very deeply into the chew before breakage.
B), Comparatively lower digestibility level than low density plant based materials.
C), Some puppies and old dogs may not be able to endure the hardness/rigidity of these high density material sheet/tube products.

US Pat. No. 7,677,203 entitled "Edible pet chew", filed on Nov. 21, 2006 and Pat. No. 8,455,025 entitled "Edible pet chew made from a single initially malleable sheet", filed on Apr. 21, 2010 by Stern, disclose a pet chew made from a plant based chewy sheet. However, these inventions did not disclose any low density plant based materials or members existing in the chews. The aforementioned "Smartbones" brand dog chews were developed under the Pat. No. 7,677,203. Pat. No. 7,677,203 merely mentioned the edible pet chew may additionally include a new "chewy edible material" in it but was silent about a low density plant based material member or portion. It also should be noted that either the "chewy sheet" or "chewable material sheet" is not a low density material. Therefore these disclosures suffer with the aforementioned drawbacks of the products made from merely a plant based chewy sheet. It should also be noted that the two layered "single sheet" component from Pat. No. 8,455,025 has two "sheet" ("sheet" in a narrow sense as undermentioned) portions as its layers. US 2013/142936 (US App. No 13/749,892) entitled "edible pet chew made from an edible malleable sheet", filed on Jan. 25, 2013 by Stern, discloses a pet chew including a hardened chewable sheet, which may further include a second chewy edible material sheet. However it is silent about a pet chew component of low density material which has an internal structure with a lot of air bubbles or cavities.

US Pat. No. 8,776,728 entitled "Edible pet chew", filed on Mar. 21, 2011 by Xu, US Pat. No. 9.044,039 and No. 9,770,044 disclosed a pet chew made of meat based chewy sheet which has less than 50% plant ingredient in sheet formula. They are silent about a low density plant based material member or portion of a member. US Pat. No. 9.044,039 disclosed a plural layered co-extruded material formed from a first part of meat based material sheet and a second part of another "edible material" sheet.

PCT/IB2015/058896 entitled "Low density animal edible chew and methods of making the same", filed on Nov. 17, 2015 by Yannick Mahe, disclosed an expanded low density chew with a smooth exterior surface. It is silent about any additional separate high density sheet/tube members existing in the chew, which may imitate appearance characteristic or functions of a traditional rawhide sheet. Without the features that it imitates the characteristics of a traditional rawhide, it does not have the aforementioned benefits that will be potentially provided by the features. US 2016/302449 A1 (Kobayashi Yosuke [JP] ET AL) entitled "Pet Food And Method For Producing Pet Food", filed on October 20th, 2016, disclosed a pet food includes a covering portion and a core, in which the ratio of the hardness of the covering portion to the core is 2 or greater. The core may have voids.

WO 2018/124880 A1 entitled "Method of producing edible pet chew product and product produced thereby", filed on Dec. 27, 2017 by Pater, disclosed a pet chew having a skin of first starch based material and a core of a second. It is silent about a pet chew including a separate sheet member and a low density member. It is silent about a pet chew including a separate sheet member and a low density member, where the low density member has an animal ingredient based material core. It is silent about a pet chew including a separate tube member and a low density member. It is silent about a pet chew including a separate tube member and a low density member, where the low density member has an animal ingredient based material core. The skin portion of the edible pet chew disclosed by Pater fails to include the feature of "thin" and substantially homogenous thickness as a sheet or tube form material does. Since its skin is not a separate member existing in the pet chew product, it can not present the features of imitating traditional rawhide sheet. Also, it is silent about an intention to introduce a pet chew member or a portion of a member imitating the characteristics of a traditional rawhide sheet. Without the features that it imitates the characteristics of a traditional rawhide, it does not have the aforementioned benefits that will be potentially provided by the features.

Attention is also directed to the following disclosures: US Appl. No. 15/845.521 entitled "Pet chew and treat made of extruded material", filed on Dec. 18, 2017; China Appl. No. 201610630054.5 entitled "An edible pet chew", filed on Aug. 3, 2016; Appl. No. PCT/US2013/066255 entitled "Aerated injection molded pet chew", filed on Oct. 22, 2013; Appl. No. PCT/GB20 14/050964 entitled "Edible animal chew", filed on Mar. 26, 2014.

Accordingly, what is needed is an edible pet chew to overcome the problems and disadvantages of the prior arts.

### SUMMARY OF THE PRESENT INVENTION

The invention is set out in the appended set of claims. An objective of the present invention is to provide an edible pet chew product intended to be chewed by a dog for an extended period of time before being digested. The pet chew may keep the dog's teeth clean, freshen breath and exercise its jaws.

An objective of the present invention is to provide an edible pet chew product equipped with a high density chewy sheet/tube member that is with satisfied rigidity/hardness/strength, which can endure a dog's relatively long time gnawing/chewing activity before being swallowed.

An objective of the present invention is to provide an edible pet chew product equipped with a plant/vegetable based (or animal ingredient based) low density material member, soft and cellular, which can significantly increase contact area with dog's teeth while being gnawed, and thus achieve an improved plaque/tartar reduction function.

An objective of the present invention is to provide an edible pet chew that is free of animal hide material, or free of rawhide in its formula.

An objective of the present invention is to provide an edible pet chew with 3 different members or portions, each of the 3 provides their respective functions that can be distinctly defined to the chew product. For example, a first member/portion primarily provides long time chewing function with its hardness/strength, a second member/portion provides intensified tooth cleaning function with its cellular structure with numerous air bubbles and softness, and a third member/portion, an edible material, provides major attractant function with strong attractive flavor or animal ingredients. Thus 3 functions can be achieved with a single feed. The edible material member/portion preferably is positioned within a pet chew product or is wrapped therein. The presence of the edible material member/portion can encourage dogs to chew and the dogs will eat starting with the exterior member/portion of the pet chew before their reaching the inner edible material member/portion. Dogs are attracted by the edible material member/portion wrapped therein but they can't reach it unless they ingest the exterior one which conceals it. In this pattern, the pet chew achieves continuing attraction to dogs through their chewing time.

An objective of the present invention is to provide an edible pet chew with 3 different members or portions, each of the 3 provide their respective functions that can be distinctly defined to the chew product, where a first member/portion is a plant based high density chewy sheet/tube, a second member/portion is an extruded plant based (or animal ingredient based) low density material, and a third member/portion is an extruded rawhide-free animal ingredient based material (such as meat based) in a certain shape.

An objective of the present invention is to provide an edible pet chew with a sheet or tube form material which can well imitate certain qualities/characteristics of traditional animal hide sheet such as the appearance quality (thin, flat and smooth surface), shape quality and chewy quality.

In one aspect of the present invention, an edible pet chew is provided combining/including a first member of plant/starch based high density TUBE (pipe) form material and a second member of a plant/starch based (or animal ingredient based) low density material, which are assembled together in a certain relationship. The chewy function of the edible pet chew product is substantially or primarily fulfilled by the tube material.

Another objective of the present invention is to provide an edible pet chew product including a first member of high density TUBE form plant/starch based material and a second plant/starch based (or animal ingredient based) material low density member, and a third edible material member/portion (the third edible material member/portion preferably is a flavored material, an animal ingredient based material or an edible material that is more palatable than the tube member and the low density material member) positioned in the low density material member, where preferably the third edible material member is positioned in the second low density member by co-extrusion process. Functions of the members/portions: the first member of tube material works as a primary chewy material; the second member of low density material works as a primary teeth cleaning material; the third flavored material (or animal ingredient based material) member/portion works as an attractant enticing dogs to chew on the product.

In another aspect of the present invention, an edible pet chew is provided combining/including a first member of high density SHEET form plant/starch based material and a second member of a low density plant/starch based (or animal ingredient based) material, which are assembled together in a certain relationship. The chewy function of the edible pet chew product is substantially or primarily fulfilled by the sheet material.

Another objective of the present invention is to provide an edible pet chew product combining a first member of high density SHEET form plant/starch based material and a second member of a low density plant/starch based (or animal ingredient based) material, and a third edible material member/portion (the third edible material member/portion preferably is a flavored material, an animal ingredient based material or an edible material that is more palatable than the sheet member and the low density material member) positioned in the low density material member, where preferably the third edible material member is positioned in the second low density member by co-extrusion process. Functions of the members/portions: the first member of sheet material works as a primary chewy material that can endure a dog's long time gnawing activity; the second member of low density material works as a primary teeth cleaning material; the third animal ingredient based (or flavored material) edible material member/portion works as an attractant enticing dogs to chew on the product.

These and other objectives, features, and advantages of the present invention will become apparent from the following detailed description, the accompanying drawings, and the appended claims.

### BRIEF DESCRIPTION OF THE DRAWINGS

The objects, features and advantages of the present invention will be apparent from the following detailed descriptions of the various aspects of the invention in conjunction with reference to the following drawings, where:

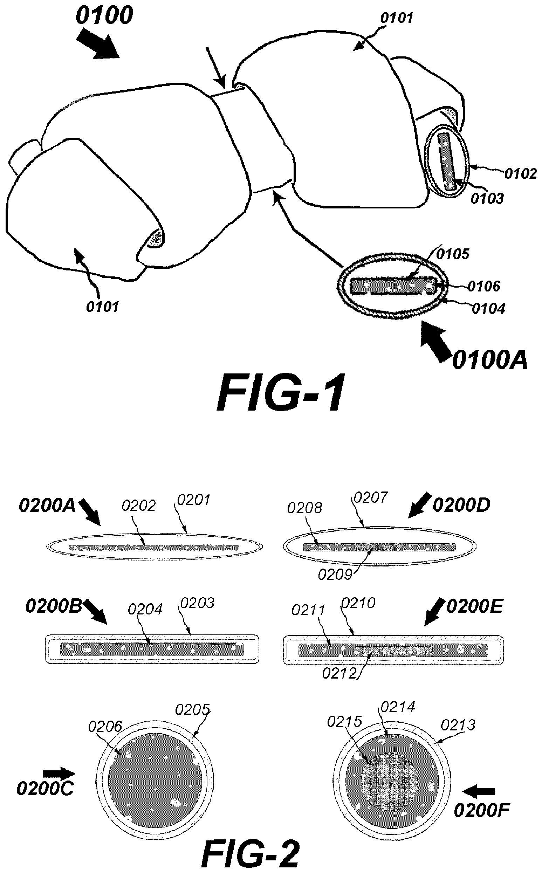

FIG. 1 is a top plan view of an edible pet chew according to an embodiment of the present invention, in a knotted bone form. It is formed from a plant/vegetable based high density chewy tube member surrounding a strip shaped plant based (or animal ingredient based) low density material member whose cross section outline shape is substantially a narrow rectangle.
FIG. 2 is a cross sectional view of 6 exemplary materials in preparation to form edible pet chew products, being formed from a plant/vegetable based chewy tube member surrounding a strip/cylinder shaped plant based (or animal ingredient based) low density material member. 3 of the 6 products have an additional edible material member serving as a core of the low density material member, which is formed by co-extrusion process.

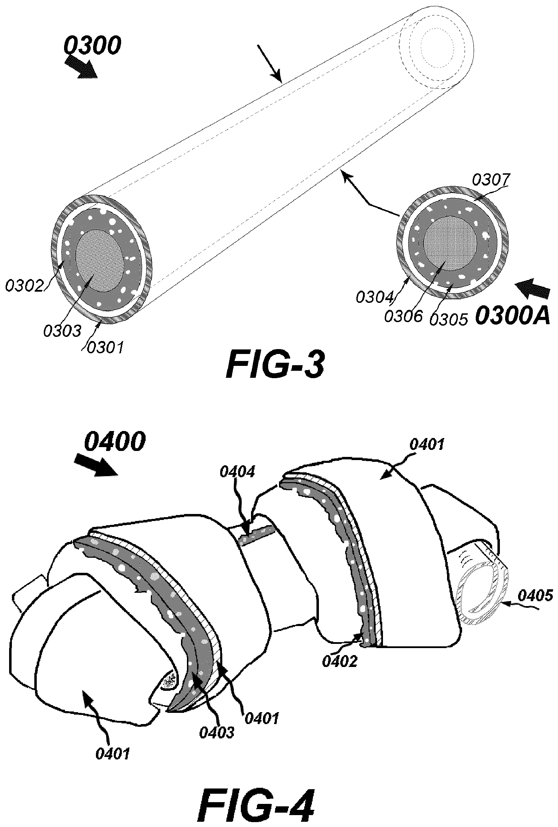

FIG. 3 is a perspective view of an edible pet chew according to an embodiment of the present invention, in a cylindrical stick form. It is formed from a plant/vegetable based chewy tube member wrapping a cylindrical plant based (or animal ingredient based) low density member with a core member of flavored or animal ingredient based material.
FIG. 4 is a top plan view of an edible pet chew according to an embodiment of the present invention, in a knotted bone form. It is formed from a plant/vegetable based chewy sheet member wrapping 3 individual chunk members made of plant based (or animal ingredient based) low density material.

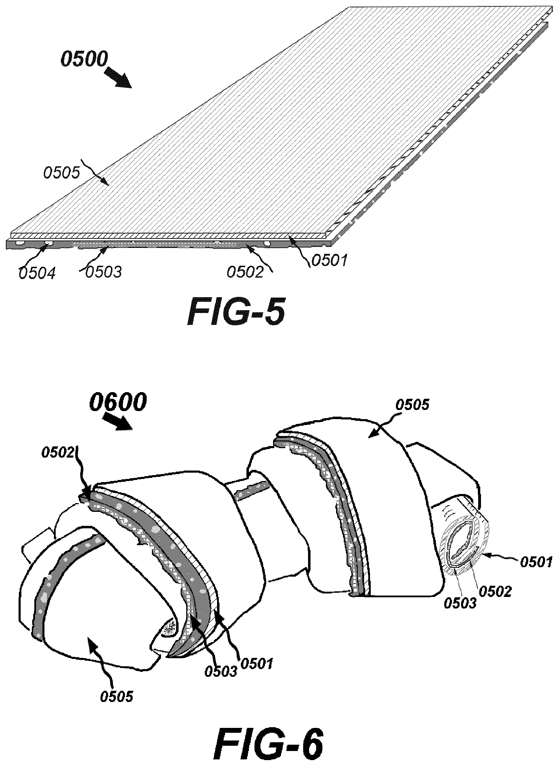

FIG. 5 is a top plan view of an extruded plant based chewy sheet member imitating traditional rawhide sheet and a co-extruded composite material combining a plant based (or animal ingredient based) low density material member and an additional meat based edible material member, in which the chewy sheet member and the co-extruded composite material overlap each other, in preparation of being applied to form an edible pet chew according to an embodiment of the present invention. The meat based edible material member is with a substantially-rectangular cross section outline shape.
FIG. 6 is a top plan view of an edible pet chew according to an embodiment of the present invention, in a knotted bone form. It is formed from an extruded plant based chewy sheet member and a co-extruded composite material including a plant based (or animal ingredient based) low density material member and an additional edible material member (meat based), which are assembled together forming alternating layers of the product. The edible material member is with a substantially-rectangular cross section outline shape, working as a core to the low density material member.

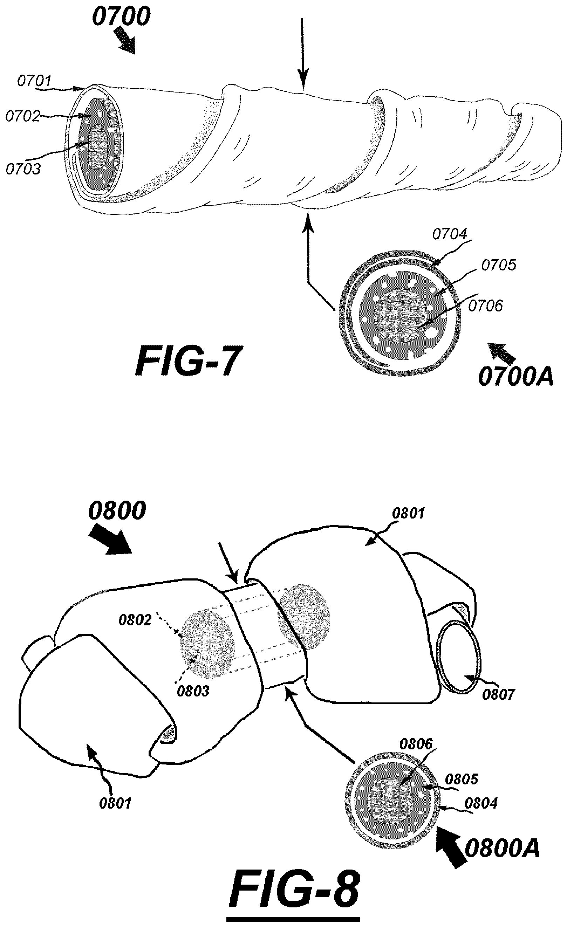

FIG. 7 is a top plan view of an edible pet chew according to an embodiment of the present invention, in a twisted stick shape. It is formed from a high density extruded vegetable based chewy sheet member and a co-extruded composite material including a vegetable based (or animal ingredient based) low density material cylindrical stick member and an additional edible material member (animal ingredient based), where the chewy sheet member wraps about the co-extruded composite material. The low density material member has an animal ingredient based material core.
FIG. 8 is a perspective view of an edible pet chew according to an embodiment of the present invention, in a knotted bone form. It is formed from a plant/vegetable based chewy tube member enveloping a cylindrical plant based (or animal ingredient based) low density member with a core of flavored or animal ingredient based material.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the scope of the present invention as set out in the appended set of claims.

It should be noted that the term "traditional rawhide" sheet in the present invention is a most popular material to form dog chews in the pet industry, generally referring to skin/hide by-product(s) obtained from the slaughter of animals (especially hoofed animals such as bovine, swine, cattle, cow, water buffalo, pig, sheep, goats, marsupial, deer and elk). The hide is not exposed to tanning process and generally fur, meat and fat is removed. The dry material of traditional rawhide is mainly made of fibrous proteins, collagen, keratin, elastin and reticulin and water.

The term of "sheet" in the present invention generally refers to a thin flat material, which is thin in comparison to its length and breadth, typically in square or rectangular shape. Typically, one surface or both two opposite surfaces of the "sheet" are substantially smooth. In a narrow sense, the "sheet" refers to a single-layered thin flat material with two smooth opposite surfaces. Preferably the thickness of the "sheet" is substantially homogeneous throughout the material. Typically the average thickness of it ranges from 0.3mm to 10mm. The term of "chewy" in the present invention generally refers to a feature of an edible material that is in a certain rigidity/hardness and/or toughness/flexibility, which can endure a dog's (fairly) long time chewing before it is swallowed by it. The hardness of a "chewy sheet" or "chewy tube" material may typically range from Shore D 15 to 65.

The term of "tube" or "pipe" in the present invention generally refers to a long hollow object whose cross section outline shape is usually round or oval (but the cross section may be in various alternative shapes such as a rectangular shape and an irregular shape). Typical cross section of the tube/pipe is in an outline shape being round (circular) or oval. But outline shape of the tube/pipe cross section may be in various shapes, such as an oval shape, a rectangular shape, a shape resembling arabic numerals "8" (twin-tube form), a shape of three-hole (a triple-tube form shape product), and irregular shapes. Preferably, the thickness of the wall of the "tube" or "pipe" is substantially homogeneous throughout the material. Typical the average wall thickness of it ranges from to 0.3mm to 10mm. Preferably, the exterior surface of it is smooth.

It should be noted that the term "low density" material in the present invention is a material with an internal structure with a lot of air bubbles or air filled cavities, preferably made of plant based composite/composition including at least 50% plant ingredients by weight on an as fed basis (or on a dry matter basis alternatively), with a bulk density typically between 0.15 g/cm³ and 1 g/cm³ (more typically between 0.3 g/cm³ and 1 g/cm³) , with less than 25% moisture content. Alternatively, the "low density" material is made of animal ingredient based composite/composition including at least 10% animal ingredient and 5%-49.9% plant ingredient by weight. Preferably, the "low density" material is with porous texture. The low density material may also be called "puffed", "cellular", "porous", "foamed" or "expanded" material. Typically the material has numerous bubbles/blisters interspersed into the whole material. Typically, the low density material is formed from a starch based composite/composition including at least 20% starch ingredients by weight on an as fed basis (or on a dry matter basis alternatively). Preferably, the low density material is free of animal hide ingredient in its formula. Preferably, it is free of rawhide ingredient in its formula. Typically it is an extruded material being formed by extrusion process. But it may be formed by another alternative processe, injection. It may be applied in a dog chew product that allows animal teeth to penetrate more deeply into the chew, thereby providing a mechanical cleansing function.

The "starch" in the present invention generally refers to the carbohydrate food substance obtained from a plant. Some examples are starches derived from potato, sweet potato, mung bean, wheat, corn, tapioca, rice, pea and mixtures thereof. The starch can be used in native form, but may also be physically or chemically modified before being applied. Of course, it is also possible to use combinations of native starch and modified starch, or combinations of different modified starches.

Compared to aforementioned "low density" materials, the term of "high density" material in the present invention refers to the kind of common plant based extruded material whose internal structure generally is free of air bubble or air filled cavity, with a bulk density typically between 0.8g/cm³ and 2g/cm³ (more typically between 0.9 g/cm³ and 1.6g/cm³), which generally has relatively higher density than those cellular "low density" materials provided that the high density and low density ones are similarly formulated. Generally, the "high density" material is free of porous texture. It may also be called "non-puffed", "non-cellular", "non-porous" or "non- foamed" material. Generally, in an edible pet chew product developed according to the present invention having both "high density" and "low density" members/portions/materials, the bulk density of its "high density" member/portion/material is relatively higher than its "low density" member/portion/material, in which its "high density" member/portion/material is over 10% (preferably over 20%) higher than its "low density" member/portion/material in bulk density. The word of "high" from "high density" refers to being relatively high. Generally "high density" material has relatively higher hardness/rigidity/strength than those cellular "low density" materials. It is most popularly applied to form a pet chew product as an extruded material in the industry in comparison to the low density ones. Typically it is an extruded plant or starch based material, which provides lower raw material cost than animal ingredient based one. Typically, the high density material is formed from a starch based composite/composition including at least 20% starch ingredients by weight on an as fed basis (or on a dry matter basis alternatively). Preferably, the high density material is free of animal hide ingredient in its formula. Preferably, the high density material is free of rawhide ingredient in its formula. Typically, the surfaces of it are smooth in texture.

It should be noted that the term "plant" in the present invention generally refers to an edible part of a plant material, where the plant material selected from, but not limited to, the group consisting of: a plant material (such as potato, sweet potato, mung bean, wheat, corn, tapioca, rice, pea, soybean, peanut, almond, mushroom, legumes, beans, grains, chia seed, algae, seaweed, spirulina, cereals and mixtures thereof), a material of plant edible part, a plant derived material, a plant protein, a plant starch, a plant fiber, a vegetable material, a vegetable derived material, a vegetable protein, a vegetable starch and mixtures thereof.

The term of "plant based" refers to a composite material including substantially at least 50% plant ingredient(s) by weight on an as fed basis (or on a dry matter basis alternatively). Typically all plant ingredients (such as plant starch, plant protein, plant fibers) existing in the "plant based" composite/composition added together account for the number one ingredient(s) in the material by weight on an as fed basis (or on a dry matter basis alternatively), which is larger than any other individual (or single) non-plant ingredient existing in the material, such as glycerin, chicken, chicken liver and sorbitol. Preferably, a plant based material of the present invention is free of animal hide ingredient or rawhide ingredient.

The term of "animal ingredient" in the present invention refers to the materials including meat, meat by-product(s) or a combination thereof, other than skin, feather, horn, hair, teeth, hooves. The term of "meat" generally refers to the clean flesh derived from slaughtered animals (including but not limited to mammals, livestock, bovine, swine, cattle, pig, poultry, chicken, duck, turkey and fish) and is limited to that part of the striate muscle which is skeletal or that part which is found in the tongue, in the diaphragm, in the heart or in the esophagus. In other words, "meat" is primarily the muscle tissue of an animal. Exemplary materials are chicken flesh, beef, pork, fish flesh. The term of "meat by-products" generally refers to the non rendered, clean parts, other than meat, derived from slaughtered animals (such as mammals and poultry), which includes, but is not limited to, lungs, spleen, kidneys, brain, livers, blood, bone, partially defatted low- temperature fatty tissue and stomachs and intestines free of their contents. It may also include milk, cheese, whey and egg. Some more exemplary materials are chicken liver, beef tendon, bovine lungs, porcine fat, animal bone powder, animal stomach.

The term of "animal ingredient based" material refers to a composite material including substantially at least 10% animal ingredient(s) by weight and 5%-49.9% plant ingredient. Preferably, all animal ingredients (such as chicken flesh, beef, pork, goat muscle, chicken liver, beef tendon, animal lungs, porcine fat, animal bone powder, animal stomach, etc) existing in the "animal ingredient based" composite/composition added together account for the number one proportion ingredient(s) by weight in the material, which is larger than any other individual (or single) non-animal ingredient existing in the material, such as potato starch, ground pea, isolated soybean protein, plant starch, plant protein, glycerin, sugar, sorbitol. More typically, the composite/composition material includes substantially at least 30% animal ingredient(s) and 5%-49.9% plant ingredient(s) by weight. Preferably, the animal ingredient based material is free of animal hide ingredient or rawhide ingredient. "Meat based" material refers to a composite material including substantially at least 10% meat ingredient(s) and 5%-49.9% plant ingredient(s) by weight. Typically, the meat based material composite includes substantially at least 30% meat ingredient(s) and 5%-49.9% plant ingredient(s) by weight. Preferably, all meat ingredients (such as chicken breast, duck, beef, pork, goat muscle, etc) existing in the "meat based" composite/composition added together account for the number one proportion ingredient(s) by weight in the material, which is larger than any other individual (or single) non-meat ingredient existing in the material, such as potato starch, ground pea, isolated soybean protein, plant starch, plant protein, glycerin, sugar, sorbitol.

The term of "flavored material" refers to a plant based material with an additional flavor ingredient in its formula. The flavor ingredient improves the attraction/palatability of the "flavored material" enticing dogs to chew on. Examples of the flavor ingredient are meat ingredient, meat by-products ingredient, chicken liver, hydrolyzed animal protein, poultry digest, chicken digest, artificial beef flavor, artificial pork flavor and brewer yeast.

It should be noted that the term "assemble" means to fit together all separate parts/members/components of a pet chew/treat product. For example, the separate components are manipulated (such as knotting, wrapping, rolling, folding and twisting) by hand to have the components together form a pet chew product in a predetermined relationship.

Here comes an aspect of the present invention. In this aspect, the edible pet chew includes a first plant based high density chewy tube member and a second plant based (or animal ingredient based) low density material member, where the chewy tube member and the low density material member are assembled together in a certain relationship. Preferably, the low density material member is wrapped therein by the chewy tube, where at least a portion of the low density material member is completely covered by the chewy tube member without exposure. Preferably, a finished product developed in this aspect is provided in a form that the first chewy tube member serves as the primary exterior surface of the finished product. The plant based high density chewy tube member may imitate certain qualities/characteristics of traditional rawhide sheet (the characteristics may include appearance, surface texture, rigidity, chewy quality, etc). The chewy tube and the low density material member are separate members. The chewy tube and the low density material members are pre-prepared individually rather than by co-extrusion, and later are assembled together. Preferably, both the chewy tube member and low density material member is an extruded one being formed by extruder. But it is foreseen that the low density material member may be formed by injection process alternatively. Typically the density of the low density material member ranges from 0.15 g/cm3 to 1 g/cm3. Typical cross section outline shape of the chewy tube is substantially a round, an oval or a rectangle (please refer to the cross section examples 0200A, 0200B and 0200C from FIG-2), but the outline is not limited to these listed shapes. Typically the low density material member is in a strip or cylindrical stick form, with a cross section outline of rectangle, oval or circle. In this aspect of the present invention, as an alternative embodiment, a finished product of the edible pet chew may be alternatively in a structure/configuration of knotted bone (referring to FIG. 1 and FIG. 8), cylindrical stick (referring to FIG. 3), twisted sticks, cylindrical roll, candy cane, ball with hollow core and strip as examples. Alternatively, the proportion of tube member to the low density material member is in the approximate range between 1:20 and 30:1 by weight in finished product. Alternatively, the formulas of the chewy tube member and the low density material member may be identical, similar or different.

Now refer to FIG 1. Edible pet chew of 0100 is an embodiment according to the aforementioned aspect of the present invention, in a knotted bone configuration, including a plant/vegetable based high density chewy tube member 0102 and a plant based (or animal ingredient based) low density material member 0103. 0100A refers to the cross section of the pet chew 0100 at the longitudinal middle of the knotted bone, with chewy tube part 0104 and low density part 0105. 0106 refers to an air bubble existing in 0105. 0103 is wrapped by 0102 with ends of 0103 exposed, whose cross section outline shape resembles a narrow rectangle. 0101 is the exterior surface of chewy tube member 0102. 0102 may be produced by an extruder with a substantially oval shaped extruder die. By adjusting extruder die designs to form chewy tube member 0102 and low density material member 0103, pet chew 0100 may present different cross section outline configurations as illustrated at 0200A, 0200B and 0200C from FIG. 2. 0200A is identical to 0100A, with oval shaped 0201 and rectangular shaped 0202. 0200B has a rectangular chewy tube member 0203 and a rectangular low density material member 0204. 0200C includes a round shaped chewy tube member 0205 and a round shaped low density material member 0206.

Preferably, in this aforementioned aspect of the present invention, the edible pet chew further includes a third additional edible material member positioned in the second low density material member, thus creating a co-extruded composite material combining a low density material member and an additional edible material member. Alternatively, the aforementioned composite material combining a low density material member and an additional edible material member is not a co-extruded one, which is formed by an extruded low density material member with a hollow core filled/stuffed with the additional edible material (for example, the additional edible material is a fluid animal ingredient based slurry material that can be filled/stuffed into the hollow core with pressure). Preferably, the third additional edible material member is wrapped about by the low density material member, in which at least a portion of the additional edible material member is covered by the low density material member without exposure. Preferably, the edible material member is formed from animal ingredient based material, or flavored material, or an edible material that is more palatable than the chewy tube member and the low density material member. Preferably, the edible material member is free of animal hide material or rawhide ingredient. Preferably, the edible material member works as a core of the low density material member, but alternatively, a small part of the edible material member may expose without coverage by the low density material member. Preferably, each of the 3 members (chewy tube member, low density member and additional edible material member) provide their respectively different functions that can be distinctly defined to the chew product. Preferably, a first chewy tube member primarily provides long time chewing function with its hardness/toughness, a second low density member provides intensified tooth cleaning function with its cellular structure with numerous air bubbles and softness, and a third edible material member provides an important attractant function with strong attractive flavor or animal ingredients. Thus the 3 different functions can be achieved with a single feed. Alternatively, the third edible material member may provide a new animal nutrition/protein function in addition to the attractant function. Preferably, the third edible material member provides the best attractant material of the 3 members to the pet chew, which is significantly more palatable/attractive than the other 2 members. Preferably, the third edible material member is formed from a flavored material or an animal ingredient based material. In this aspect of the present invention, as an alternative embodiment, a finished product of the edible pet chew may be alternatively in a structure/configuration of knotted bone (referring to FIG. 8), cylindrical stick (referring to FIG. 3), twisted sticks, cylindrical roll, candy cane, ball with hollow core and strip as examples. This new product is considered as involving an inventive step, which is not obvious to a skilled person with ordinary skills in this art. It is not obvious for a skilled person with ordinary skills with a very intention to disclose a product that includes a high density chewy tube member and a co-extruded composite material, where the co-extruded composite material combines a low density material member and an additional edible material member (preferably as a core member), where each of the 3 members (chewy tube member, low density member and additional edible material member) may provide their respectively different functions that can be distinctly defined to the chew product, in which 3 different functions may be provided by a single feed. The invention requires a surprising disclosure.

According to an alternative embodiment of the present invention, a formula of the aforementioned or undermentioned edible material member (animal ingredient based material member) positioned in the low density material member includes, by weight on an as formulated basis: 20%-80% frozen meat or dried meat powder, 10%-49.9% plant ingredient, 2%-40% humectants (more typically 10%-30% humectants; humectants such as glycerin, sorbitol), preferably free of animal hide (rawhide) material. It may further include additives such as a colorant (such as FD&C Red 40) and a preservative (such as potassium sorbate). For an instance, an alternative formula is: Frozen Chicken breast (68%), Corn Starch (14%), Isolated soy protein (10%), and Glycerin (8%).

According to an alternative embodiment of the present invention, a formula of the aforementioned or undermentioned edible material member (flavored material member) positioned in the low density material member includes, by weight on an as fed basis: 50%-80% plant material, 2%-40% humectants (more typically 10%-30% humectants; humectants such as glycerin, sorbitol), and 0. 1%-30% attractant material (such as dried brewer, dried chicken breast powder, chicken digest, hydrolyzed chicken liver and artificial beef flavor), preferably free of animal hide (rawhide) material. It may further include additives such as a colorant (such as FD&C Red 40) and a preservative (such as potassium sorbate). For an instance, an alternative formula is: Corn Starch (62%), Chicken breast (15%), Hydrolyzed chicken liver (2%), Water (12%) and Glycerin (9%).

Now refer to FIG. 3. Edible pet chew of 0300 is an embodiment according to the present invention, in a cylindrical stick shape, including a plant/vegetable based high density chewy tube member 0301 and a plant based (or animal ingredient based) low density material member 0302 with a flavored material or animal ingredient based material core 0303. 0301 wraps about 0302 with the ends of 0302 exposed. 0300A is a cross section of pet chew 0300. 0304 is the chewy tube member, 0305 is the low density material member and 0306 is the core member of 0305. 0307 is a space between 0304 and 0305.

The chewy tube member 0301 may be produced by an extruder with a substantially round shaped extruder die. By adjusting extruder die designs to form chewy tube member 0301, low density material member 0302 and core member 0303, pet chew 0300 may present different cross section outline configurations as illustrated at 0200D, 0200E and 0200F from FIG. 2. 0200F is identical to 0300A, with round/circular shaped 0213, 0214 and 0215. 0200D includes oval shaped chewy tube member 0207, rectangular shaped low density material member 0208, and rectangular shaped edible material member 0209. 0200E has rectangular shaped chewy tube member 0210, rectangular shaped low density material member 0211 and rectangular shaped edible material member 0212.

Refer to FIG. 8. Edible pet chew of 0800 is an embodiment according to the present invention, in a knotted bone form, including a plant/vegetable based high density chewy tube member 0801 and a plant based (or animal ingredient based) low density member 0802 with a flavored material or animal ingredient based material core 0803. 0801 wraps 0802. 0800A is a cross section of pet chew 0800 at the middle of the diaphysis. 0804 is the chewy tube member, 0805 is the low density member and 0806 is the core member of 0805. 0807 refers to an end of 0801. 0802 is too short to be visible at the end of 0801.

Here comes another aspect of the present invention. In this aspect, the edible pet chew includes a first plant based high density chewy sheet member and a second plant based (or animal ingredient based) low density material member, where the chewy sheet member and the low density material member are assembled together in a certain relationship. Preferably, the low density material member is wrapped therein by the chewy sheet, where at least a portion of the low density material member is completely covered by the chewy sheet member without exposure. Preferably, a finished product developed in this aspect is provided in a form that the first chewy sheet member serves as the primary exterior surface of the finished product. The plant based high density chewy sheet member may imitate certain qualities/characteristics of traditional rawhide sheet (the characteristics may include appearance, form, shape, surface texture, rigidity, chewy quality, etc). The chewy sheet member and the low density material member are separate members. The chewy sheet and low density material members are pre-prepared individually rather than by co- extrusion, and later are assembled together. Preferably, both the chewy sheet member and low density material member is an extruded one being formed by extruder. But it is foreseen that the low density material member may be formed by injection process alternatively. Typically the density of the low density material member ranges from 0.15 g/cm³ to 1 g/cm³. A typical cross section outline shape of the chewy sheet is substantially narrow rectangle. Typically the low density material member is in a thin flat piece, strip, or chunk form. Alternatively, the proportion of sheet member to the low density material member is in the approximate range between 1:20 and 30:1 by weight in finished product. Alternatively, the formulas of the chewy sheet member and the low density material member may be identical, similar or different. In this aspect of the present invention, as an alternative embodiment, a finished product of the edible pet chew may be alternatively in a structure/configuration of knotted bone (referring to FIG. 4), cylindrical stick, twisted sticks, cylindrical roll, candy cane, ball with hollow core and strip as examples.

Now refer to FIG. 4. Edible pet chew of 0400 is an embodiment according to the aforementioned aspect of the present invention, in a knotted bone configuration, including a plant/vegetable based high density chewy sheet member 0405 and three plant based (or animal ingredient based) low density material member 0402, 0403 and 0404. 0402, 0403, 0404 are in a strip form, which are wrapped by 0405 with a portion of them exposed. 0401 is the exterior surface of chewy sheet member 0405. 0405 may be produced by an extruder with a substantially narrow rectangular shaped extruder die to form a sheet configuration.

Preferably, in the aforementioned aspect of the present invention, the edible pet chew further includes a third additional edible material member positioned in the second low density material member, thus creating a co-extruded composite material combining a low density material member and an additional edible material member. Alternatively, the aforementioned composite material combining a low density material member and an additional edible material member is not a co-extruded one, which is formed by an extruded low density material member with a hollow core filled/stuffed with the additional edible material (for example, the additional edible material is a fluid animal ingredient based slurry material that can be filled/stuffed into the hollow core with pressure). Preferably, the third additional edible material member is wrapped about by the low density material member, in which at least a portion of the additional edible material member is covered by the low density material member without exposure. Preferably, the edible material member is formed from animal ingredient based material or rawhide ingredient, or flavored material, or an edible material that is more palatable than the chewy sheet member and the low density material member. Preferably, the edible material member is free of animal hide material. Preferably, the edible material member works as a core of the low density material member, but alternatively, a small part of the edible material member may expose without coverage by the low density material member. Preferably, each of the 3 members (chewy sheet member, low density member and additional edible material member) provide their respectively different functions that can be distinctly defined to the chew product. Preferably, a first chewy sheet member primarily provides long time chewing function with its hardness/toughness, a second low density member provides intensified tooth cleaning function with its cellular structure with numerous air bubbles and softness, and a third edible material member provides an important attractant function with strong attractive flavor or animal ingredients. Thus the 3 different functions can be achieved with a single feed. Alternatively, the third edible material member may provide a new animal nutrition/protein function in addition to the attractant function. Preferably, the third edible material member provides the best attractant material of the 3 members to the pet chew, which is significantly more palatable/attractive than the other 2 members. Preferably, the third edible material member is formed from a flavored material or an animal ingredient based material. In this aspect of the present invention, as an alternative embodiment, a finished product of the edible pet chew may be alternatively in a structure/configuration of knotted bone (referring to FIG. 6), cylindrical stick (referring to FIG. 7), twisted sticks, cylindrical roll, candy cane, ball with hollow core and strip as examples. This new product is considered as involving an inventive step, which is not obvious to a skilled person with ordinary skills in this art. It is not obvious for a skilled person with ordinary skills with a very intention to disclose a product that includes a high density chewy sheet member and a co-extruded composite material including a low density material member, where the co-extruded composite material combines a low density material member and an additional edible material member preferably as a core member, where each of the 3 members (chewy sheet member, low density member and additional edible material member) may provide their respectively different functions that can be distinctly defined to the chew product, in which 3 different functions may be provided by a single feed. The invention requires a surprising disclosure.

Now refer to FIG. 5. A high density extruded plant based chewy sheet material 0501 and a co-extruded composite material is prepared, where the co-extruded composite material includes a plant based (or animal ingredient based) low density material member 0502 and an additional edible material member 0503, in preparation to form edible pet chews of the present invention. The additional edible material member 0503 is positioned in 0502, with a cross section outline of substantially rectangle. 0505 refers to exterior surface of 0501. 0504 refers to an air bubble existing in 0502. 0503 works as a core of 0502, which is formed from a meat based material. 0501 and 0502/0503 are now overlapped in a preparation of being further manipulated to form an edible pet chew according to an embodiment of the present invention.

Please refer to FIG. 6. Edible pet chew of 0600 is an embodiment according to the present invention, in a knotted bone shape, including a high density extruded plant based chewy sheet member 0501 and a co-extruded composite material including a plant based (or animal ingredient based) low density member 0502 with a core 0503 of flavored material or meat based material member with a substantially-rectangular cross section shape. 0505 is exterior surface of 0501. 0501 and 0502/0503 are assembled together forming alternating layers of the pet chew product, with a portion of 0502 being exposed without coverage.

Please refer to FIG. 7. Edible pet chew of 0700 is an embodiment according to the present invention, in a twisted stick shape, including a high density extruded vegetable based chewy sheet member 0701 and a co-extruded composite material including a vegetable based (or animal ingredient based) low density cylindrical stick member 0702 with an animal ingredient based material core member 0703 with a round cross section shape. 0701 wraps about 0702, with the ends of 0702 being exposed. 0700A is a cross section of pet chew 0700. 0704 is the chewy sheet member, 0705 is the low density material member and 0706 is the core member.

According to an alternative embodiment of the present invention, a plant based formula for the chewy tube or chewy sheet members/portions (such as 0102 from FIG. 1, 0301 from FIG. 3, 0401 from FIG. 4, 0501 from FIG. 5 and 6, 0701 from FIG. 7) includes, by weight on an as fed basis (this formula may also apply to the low density member/portion, such as 0103 from FIG. 1, 0302 from FIG. 3, 0402 from FIG. 4, 0502 from FIG. 5 and 6, 0702 from FIG. 7): 20%-80% plant material, 2%-40% humectants (more typically 10%-30% humectants; humectants such as glycerin, sorbitol), preferably free of animal hide (rawhide) material. It may further include additives such as an attractant (such as dried brewer, hydrolyzed chicken liver), a colorant (such as titanium dioxide) and a preservative (such as potassium sorbate). The formula is a plant based material one. For an instance, an alternative formula is: Potato Starch (69%), Chicken breast (8%), Water (12%) and Glycerin (11%).

According to an alternative embodiment of the present invention, a formula for the low density member/portion, such as 0103 from FIG. 1, 0302 from FIG. 3, 0402 from FIG. 4, 0502 from FIG. 5 and 6, 0702 from FIG. 7) includes: 10%-50% animal ingredient(s), 30%-49.9% plant material, 2%-40% humectants (more typically 10%-30% humectants; humectants such as glycerin, sorbitol), preferably free of animal hide (rawhide) material. It may further include additives such as an attractant (such as dried brewer, hydrolyzed chicken liver), a colorant (such as titanium dioxide) and a preservative (such as potassium sorbate). The formula is an animal ingredient based material one. For an instance, an alternative formula is: Frozen Chicken Breast (24%), Corn Starch (49%), Cattle Bone Powder (5%), beef liver (3%) and Glycerin (19%).

The humectant is preferably selected from the group consisting of: plant protein isolate, soy protein Isolate, wheat protein isolate, corn protein isolate, glucose syrup, malt syrup, sodium pyrophosphate, trisodium orthophosphate, sodium hexametaphosphate, sodium tripolyphosphate, phosphoric acid, calcium dihydrogen phosphate, sodium lactate, maltitol, sorbitol, propylene glycol, glycerin, sodium dihydrogen phosphate, sodium phosphate dibasic, potassium lactate, sodium lactate, acetylated distarch phosphate and acetylated distarch adipate.

According to an alternative embodiment of the present invention, a formula for the aforementioned chewy tube or chewy sheet members/portions includes, by weight on an as fed basis (this formula may also apply to the low density member/portion): 50%-80% plant material, 2%-40% humectants (more typically 10%-30% humectants; humectants such as glycerin, sorbitol), 0.1%-20% animal ingredient (such as poultry digest, chicken liver, chicken meal, chicken breast powder, fish, bone powder). The formula is plant based material one. For an instance, an alternative formula is: Tapioca (50%), Wheat starch (19%), Water (13%), Soybean protein (8%), Pork (5%), Sorbitol (3%) and Xanthan gum (2%).

According to an alternative embodiment of the present invention, a formula for the aforementioned chewy tube or chewy sheet members/portions includes, by weight on an as fed basis (this formula may also apply to the low density member/portion): 15%-70% plant starch material, 2%-20% plant protein material, 2%-40% humectants (more typically 10%-30% humectants; humectants such as glycerin, sorbitol), 0.1%-20% animal ingredient (such as poultry digest, chicken liver, chicken meal, chicken breast powder, fish), 0. 1%-8% dried brewer yeast. For an instance, an alternative formula is: Sweet potato (52.7%), Potato starch (10%), Isolated pea protein (10%), Chicken breast powder (5%), Cattle liver powder (1%), Fructose (3%), Gelatin (2%), Bone powder (3%), Water (12%), Dried brewer yeast (1%), Sodium pyrophosphate (0.3%).

According to an alternative embodiment of the present invention, a formula for the low density member/portion includes, by weight: 10%-40% animal ingredient (such as poultry digest, chicken liver, chicken meal, chicken breast powder, fish, bone powder), 20%-49.9% plant material, 2%-40% humectants (more typically 10%-30% humectants; humectants such as glycerin, sorbitol). The formula is an animal ingredient based material one. For an instance, an alternative formula is: Frozen chicken breast (36%), Potato (20%), Wheat starch (13%), Water (13%), Soybean protein (8%), Sorbitol (8%) and Xanthan gum (2%).

In an embodiment, the present disclosure provides a method of making a plant based high density chewy sheet or chewy tube member (the member examples such as 0102 from FIG. 1, 0301 from FIG. 3, 0401 from FIG. 4, 0501 from FIG. 6 and 0701 from FIG. 7) of an edible pet chew of the present invention. The method comprises the steps of: i, Raw material storage; ii, Grinding; iii, Mixing; iv, Material feeding; v, Pelletizing (alternative); vi, Extruding (preferably employing single screw extruder).

In the aforementioned pelletizing step, starch materials may get pre-gelatinized. Temperature profile along the extruder barrel may be, for example: Zone 1, 80-100 °C; Zone 2, 100-140 °C; Zone 3, 100-140 °C; Zone 4, 100-140 °C; Zone 5, 100-140 °C; Zone 6, 100-130 °C; Zone 7, 100-125 °C; Zone 8, 90-100 °C; Zone 9, 85-110 °C; Zone 10, 60-90 °C. Material feeding speed: 40-80HZ. Screw rotational speed: 100-300HZ.

In the aforementioned extruding step (single screw extruder), the sheet or tube formed material is shaped therein. Temperature profile along the extruder barrel may be, for example: Zone 1, 50-70 °C; Zone 2, 70-110 °C; Zone 3, 70-110 °C; Zone 4, 70-100 °C. Material feeding speed: 10-20HZ. Screw rotational speed: 15-40HZ.

In another embodiment, the present disclosure provides a method of making a plant based (or animal ingredient based) low density material member (the member examples such as 0103 from FIG. 1, 0302 from FIG. 3, 0402 from FIG. 4, 0502 from FIG. 5 and 0702 from FIG. 7) an edible pet chew of the present invention. The method comprises the steps of: i, Raw material storage; ii, Grinding; iii, Mixing; iv, Material feeding; v, Extruding (preferably employing twin screw extruder).

In the aforementioned extruding step (twin screw extruder), the low density material member is shaped therein. Temperature profile along the extruder barrel may be, for example: Zone 1, 60-80 °C; Zone 2, 100-150 °C; Zone 3, 100-150 °C.

One skilled in the art will understand that the embodiment of the present invention as shown in the drawings and described above is exemplary only and not intended to be limiting.

## Claims

1. An edible pet chew, comprising:
an extruded plant-based high density tube member being a separate member or an extruded plant-based high density sheet member being a separate member, wherein said extruded plant-based high density tube member comprises at least 20% plant starch by weight on an as fed basis or on a dry matter basis, wherein said extruded plant-based high density sheet member comprises at least 20% plant starch by weight on an as fed basis or on a dry matter basis; and
a cellular low density material member being a separate member, wherein said cellular low density material member comprises numerous air bubbles interspersed into the material, wherein said cellular low density material member is formed by an extrusion process or an injection process,
wherein the bulk density of said extruded plant-based high density tube member is at least 10% larger than that of said cellular low density material member wherein said extruded plant-based high density tube member is a long hollow object, wherein the bulk density of said extruded plant-based high density sheet member is at least 10% larger than that of said cellular low density material member, wherein said extruded plant-based high density tube member and said cellular low density material member are separate members to form a final product of said edible pet chew together, wherein said extruded plant-based high density tube member and said cellular low density material member are assembled together in a predetermined relationship, wherein said extruded plant-based high density sheet member and said cellular low density material member are separate members to form a final product of said edible pet chew together, wherein said extruded plant-based high density sheet member and said cellular low density material member are assembled together in a predetermined relationship.

2. The edible pet chew, as recited in claim 1, wherein
wherein said cellular low density material member is a plant-based cellular low density material member.

3. The edible pet chew, as recited in claim 2, wherein
said extruded plant-based high density tube member comprises substantially at least 50% plant ingredient by weight or said extruded plant-based high density sheet member comprises substantially at least 50% plant ingredient by weight, and wherein said plant-based cellular low density material member comprises substantially at least 50% plant ingredient by weight.

4. The edible pet chew, as recited in anyone of claim 2 and 3, wherein
the wall thickness of said extruded plant-based high density chewy tube member is substantially homogeneous throughout the material or the thickness of said extruded plant-based high density chewy sheet member is substantially homogeneous throughout the material, wherein the bulk density of said extruded plant-based high density chewy tube member ranges from 0.8g/cm³ to 2g/cm³ or bulk density of said extruded plant-based high density chewy sheet member ranges from 0.8g/cm³ to 2g/cm³, and wherein bulk density of said plant-based cellular low density material member ranges from 0.15g/cm³ to 1g/cm³.

5. The edible pet chew, as recited in anyone of claim 2, 3 and 4, wherein
Said extruded plant-based high density tube member is formed from a first starch based composite or said extruded plant-based high density sheet member is formed from a first starch based composite, wherein said first starch based composite comprises a starch ingredient and a humectant ingredient, wherein said starch ingredient of said first starch based composite is selected from the group consistingof: potato starch, sweet potato starch, mung bean starch, wheat starch, corn starch, tapioca starch, rice starch and pea starch, wherein said plant-based cellular low density material member is formed from a second starch based composite, wherein said second starch based composite comprises a starch ingredient and a humectant ingredient, and wherein said starch ingredient of said second starch based composite is selected from the group consisting of: potato starch, sweet potato starch, mung bean starch, wheat starch, corn starch, tapioca starch, rice starch and pea starch.

6. The edible pet chew, as recited in anyone of claim 2, 3, 4 and 5, wherein
said plant-based cellular low density material member is wrapped about by said extruded plant-based high density tube member or said plant-based cellular low density material member is wrapped about by said extruded plant-based high density sheet member, wherein at least a portion of said plant-based cellular low density material member is covered by said extruded plant-based high density tube member without exposure or at least a portion of said plant-based cellular low density material member is covered by said extruded plant-based high density sheet member without exposure, wherein the proportion of said extruded plant-based high density tube member to said plant-based cellular low density material member is in the range between 1:20 and 30:1 by weight in finished product or the proportion of said extruded plant-based high density sheet member to said plant-based cellular low density material member is in the range between 1:20 and 30:1 by weight in finished product, wherein cross section outline shape of said extruded plant-based high density tube member is selected from the group consisting of: a round shape, an oval shape, a rectangular shape, and wherein the average wall thickness of said extruded plant-based high density tube member ranges from 0.3mm to 10mm or the average thickness of said extruded plant-based high density sheet member ranges from 0.3mm to 10mm.

7. The edible pet chew, as recited in anyone of claim 1, 2, 3, 4, 5 and 6, further comprising:
an edible material member, wherein said edible material member is wrapped about by said cellular low density material member, and wherein at least a portion of said edible material member is covered by said cellular low density material member without exposure, and wherein said cellular low density material member is a plant-based cellular low density material member.

8. The edible pet chew, as recited in claim 7, wherein
said edible material member is formed from an animal ingredient based material or a flavored material, wherein said animal ingredient based material comprises substantially at least 10% animal ingredient by weight, wherein total animal ingredient proportion by weight existing in said animal ingredient based material is greater than any single non-animal ingredient, and wherein said flavored material is a plant-based material comprising a plant ingredient and a flavor ingredient.

9. The edible pet chew, as recited in anyone of claim 7 and 8, wherein
each of said extruded plant-based high density tube member or said extruded plant-based high density sheet member, said plant-based cellular low density material member and said edible material member provides their respectively distinctly different function to finished product, wherein said edible material member is positioned in said plant-based cellular low density material member by a co-extrusion process, and wherein said plant-based cellular low density material member and said edible material member together form a co-extruded composite material member.

10. The edible pet chew, as recited in anyone of claim 1, 2, 3, 4, and 5, further comprising:
an edible material member, wherein said edible material member is wrapped about by said extruded plant-based high density tube member and said cellular low density material member or said edible material member is wrapped about by said extruded plant-based high density sheet member and said cellular low density material member, wherein at least a part of said edible material member is covered by said extruded plant-based high density tube member and said cellular low density material member without exposure or at least a part of said edible material member is covered by said extruded plant-based high density sheet member and said cellular low density material member without exposure, wherein said edible material member is formed from an animal ingredient based material or a flavored material, wherein said animal ingredient based material comprises substantially at least 10% animal ingredient by weight, wherein total animal ingredient proportion by weight existing in said animal ingredient based material is greater than any single non-animal ingredient, and wherein said flavored material is a plant-based material comprising a plant ingredient and a flavor ingredient.

11. The edible pet chew, as recited in anyone of claim 10, wherein
each of said extruded plant-based high density tube member, said plant-based cellular low density material member and said edible material member provides their respectively different function to finished product or each of said extruded plant-based high density sheet member, said plant-based cellular low density material member and said edible material member provides their respectively different function to finished product.

## Patentansprüche

1. Verzehrbares Haustier-Kaustück, umfassend:
ein extrudiertes, pflanzenbasiertes Röhrenteil hoher Dichte, das ein separates Teil ist, oder ein extrudiertes, pflanzenbasiertes Plattenteil hoher Dichte, das ein separates Teil ist, wobei das extrudierte, pflanzenbasierte Röhrenteil hoher Dichte mindestens 20 Gewichtsprozent Pflanzenstärke, auf einer Basis wie gefüttert oder auf einer Trockenmasse-Basis, umfasst, wobei das extrudierte, pflanzenbasierte Plattenteil hoher Dichte mindestens 20 Gewichtsprozent Pflanzenstärke, auf einer Basis wie gefüttert oder auf einer Trockenmasse-Basis, umfasst; und
ein Teil mit zelligem Material niedriger Dichte, das ein separates Teil ist, wobei das zellige Material niedriger Dichte zahlreiche Luftblasen umfasst, mit denen das Material durchsetzt ist, wobei das Teil mit zelligem Material niedriger Dichte durch einen Extrusionsvorgang oder einen Spritzvorgang gebildet ist,
wobei die Schüttdichte des extrudierten, pflanzenbasierten Röhrenteils hoher Dichte mindestens 10% größer ist als diejenige des Teils mit zelligem Material niedriger Dichte, wobei das extrudierte, pflanzenbasierte Röhrenteil hoher Dichte ein langer, hohler Gegenstand ist, wobei die Schüttdichte des extrudierten, pflanzenbasierten Plattenteils hoher Dichte mindestens 10% größer ist als diejenige des Teils mit zelligem Material niedriger Dichte, wobei das extrudierte, pflanzenbasierte Röhrenteil hoher Dichte und das Teil mit zelligem Material niedriger Dichte separate Teile sind, die zusammen ein Endprodukt des verzehrbaren Haustier-Kaustücks bilden, wobei das extrudierte, pflanzenbasierte Röhrenteil hoher Dichte und das Teil mit zelligem Material niedriger Dichte in einem vorgegebenen Verhältnis zusammengesetzt sind, wobei das extrudierte, pflanzenbasierte Plattenteil hoher Dichte und das Teil mit zelligem Material niedriger Dichte separate Teile sind, die zusammen ein Endprodukt des verzehrbaren Haustier-Kaustücks bilden, wobei das extrudierte, pflanzenbasierte Plattenteil hoher Dichte und das Teil mit zelligem Material niedriger Dichte in einem vorgegebenen Verhältnis zusammengesetzt sind.

2. Verzehrbares Haustier-Kaustück nach Anspruch 1, wobei wobei das Teil mit zelligem Material niedriger Dichte ein Teil mit pflanzenbasiertem, zelligem Material niedriger Dichte ist.

3. Verzehrbares Haustier-Kaustück nach Anspruch 2, wobei das extrudierte, pflanzenbasierte Röhrenteil hoher Dichte im Wesentlichen mindestens 50 Gewichtsprozent Pflanzenbestandteil umfasst oder das extrudierte, pflanzenbasierte Plattenteil hoher Dichte im Wesentlichen mindestens 50 Gewichtsprozent Pflanzenbestandteil umfasst, und wobei das Teil mit pflanzenbasiertem, zelligem Material niedriger Dichte im Wesentlichen mindestens 50 Gewichtsprozent Pflanzenbestandteil umfasst.

4. Verzehrbares Haustier-Kaustück nach einem der Ansprüche 2 und 3, wobei die Wanddicke des extrudierten, pflanzenbasierten Kauröhrenteils hoher Dichte im Wesentlichen homogen über das Material ist oder die Dicke des extrudierten, pflanzenbasierten Kauplattenteils hoher Dichte im Wesentlichen homogen über das Material ist, wobei die Schüttdichte des extrudierten, pflanzenbasierten Kauröhrenteils hoher Dichte von 0,8 g/cm³ bis 2 g/cm³ reicht oder die Schüttdichte des extrudierten, pflanzenbasierten Kauplattenteils hoher Dichte von 0,8 g/cm³ bis 2 g/cm³ reicht, und wobei die Schüttdichte des Teils mit pflanzenbasiertem, zelligem Material niedriger Dichte von 0,15 g/cm³ bis 1 g/cm³ reicht.

5. Verzehrbares Haustier-Kaustück nach einem der Ansprüche 2, 3 und 4, wobei
das extrudierte, pflanzenbasierte Röhrenteil hoher Dichte mit einem ersten Stärke-basierten Verbundmaterial gebildet ist oder das extrudierte, pflanzenbasierte Plattenteil hoher Dichte mit einem ersten Stärke-basierten Verbundmaterial gebildet ist, wobei das erste Stärke-basierte Verbundmaterial einen Stärke-Bestandteil und einen Feuchthaltemittel-Bestandteil umfasst, wobei der Stärke-Bestandteil des ersten Stärke-basierten Verbundmaterials ausgewählt ist aus der Gruppe bestehend aus: Kartoffelstärke, Süßkartoffelstärke, Mungbohnenstärke, Weizenstärke, Maisstärke, Tapiokastärke, Reisstärke und Erbsenstärke, wobei das Teil mit pflanzenbasiertem, zelligem Material niedriger Dichte mit einem zweiten Stärke-basierten Verbundmaterial gebildet, wobei das zweite Stärke-basierte einen Stärke-Bestandteil und einen Feuchthaltemittel-Bestandteil umfasst, und wobei der Stärke-Bestandteil des zweiten Stärke-basierten Verbundmaterials ausgewählt ist aus der Gruppe bestehend aus: Kartoffelstärke, Süßkartoffelstärke, Mungbohnenstärke, Weizenstärke, Maisstärke, Tapiokastärke, Reisstärke und Erbsenstärke.

6. Verzehrbares Haustier-Kaustück nach einem der Ansprüche 2, 3, 4 und 5, wobei
das Teil mit pflanzenbasiertem, zelligem Material niedriger Dichte umhüllt ist von dem extrudierten, pflanzenbasierten Röhrenteil hoher Dichte oder das Teil mit pflanzenbasiertem, zelligem Material umhüllt ist von dem extrudierten, pflanzenbasierten Plattenteil hoher Dichte, wobei mindestens ein Abschnitt des Teils mit pflanzenbasiertem, zelligem Material niedriger Dichte von dem extrudierten, pflanzenbasierten Röhrenteil hoher Dichte lückenlos bedeckt ist oder mindestens ein Abschnitt des Teils mit pflanzenbasiertem, zelligem Material niedriger Dichte von dem extrudierten, pflanzenbasierten Plattenteil hoher Dichte lückenlos bedeckt ist, wobei das Verhältnis des extrudierten, pflanzenbasierten Röhrenteils hoher Dichte zu dem Teil mit pflanzenbasiertem, zelligem Material niedriger Dichte im fertigen Produkt im Bereich zwischen 1:20 und 30:1 nach Gewicht liegt oder das Verhältnis des extrudierten, pflanzenbasierten Plattenteils hoher Dichte zu dem Teil mit pflanzenbasiertem, zelligem Material niedriger Dichte im fertigen Produkt im Bereich zwischen 1:20 und 30:1 nach Gewicht liegt, wobei eine Querschnittsumrissform des extrudierten, pflanzenbasierten Röhrenteils hoher Dichte ausgewählt ist aus der Gruppe bestehend aus: einer runden Form, einer ovalen Form, einer rechteckigen Form, und wobei die mittlere Wanddicke des extrudierten, pflanzenbasierten Röhrenteils hoher Dichte von 0,3 mm bis 10 mm reicht oder die mittlere Dicke des extrudierten, pflanzenbasierten Plattenteils hoher Dichte von 0,3 mm bis 10 mm reicht.

7. Verzehrbares Haustier-Kaustück nach einem der Ansprüche 1, 2, 3, 4, 5 und 6, zudem umfassend:
ein Teil mit verzehrbarem Material, wobei das Teil mit verzehrbarem Material von dem Teil mit zelligem Material niedriger Dichte umhüllt ist, und wobei mindestens ein Abschnitt des Teils mit verzehrbarem Material von dem Teil mit zelligem Material niedriger Dichte lückenlos bedeckt ist, und wobei das Teil mit zelligem Material niedriger Dichte ein Teil mit pflanzenbasiertem, zelligem Material niedriger Dichte ist.

8. Verzehrbares Haustier-Kaustück nach Anspruch 7, wobei das Teil mit verzehrbarem Material mit einem auf tierischem Bestandteil basierenden Material oder einem aromatisierten Material gebildet ist, wobei das auf tierischem Bestandteil basierende Material im Wesentlichen mindestens 10 Gewichtsprozent tierischen Bestandteil umfasst, wobei der gesamte Gewichtsanteil an tierischem Bestandteil, der in dem auf tierischem Bestandteil basierenden Material vorhanden ist, größer ist als jedweder einzelne nicht-tierische Bestandteil, und wobei das aromatisierte Material ein pflanzenbasiertes Material ist, das einen Pflanzenbestandteil und einen Aromabestandteil umfasst.

9. Verzehrbares Haustier-Kaustück nach einem der Ansprüche 7 und 8, wobei jedes von dem extrudierten, pflanzenbasierten Röhrenteil hoher Dichte oder dem extrudierten, pflanzenbasierten Plattenteil hoher Dichte, dem Teil mit pflanzenbasiertem, zelligem Material niedriger Dichte und dem Teil mit verzehrbarem Material dem fertigen Produkt seine jeweils deutlich unterschiedliche Funktion verleiht, wobei das Teil mit verzehrbarem Material durch einen Co-Extrusionsvorgang in dem Teil mit pflanzenbasiertem, zelligen Material niedriger Dichte platziert ist, und wobei das Teil mit pflanzenbasiertem, zelligem Material niedriger Dichte und das Teil mit verzehrbarem Material zusammen ein co-extrudiertes Verbundmaterialteil bilden.

10. Verzehrbares Haustier-Kaustück nach einem der Ansprüche 1, 2, 3, 4 und 5, zudem umfassend:
ein Teil mit verzehrbarem Material, wobei das Teil mit verzehrbarem Material von dem extrudierten, pflanzenbasierten Röhrenteil hoher Dichte und dem Teil mit zelligem Material niedriger Dichte umhüllt ist oder das Teil mit verzehrbarem Material von dem extrudierten, pflanzenbasierten Plattenteil hoher Dichte und dem Teil mit zelligem Material niedriger Dichte umhüllt ist, wobei mindestens ein Bereich des Teils mit verzehrbarem Material von dem extrudierten, pflanzenbasierten Röhrenteil hoher Dichte und dem Teil mit zelligem Material niedriger Dichte lückenlos bedeckt ist oder mindestens ein Bereich des Teils mit verzehrbarem Material von dem extrudierten, pflanzenbasierten Plattenteil hoher Dichte und dem Teil mit zelligem Material niedriger Dichte lückenlos bedeckt ist, wobei das Teil mit verzehrbarem Material mit einem auf tierischem Bestandteil basierendem Material oder einem aromatisierten Material gebildet ist, wobei das auf tierischem Bestandteil basierende Material im Wesentlichen mindestens 10 Gewichtsprozent tierischen Bestandteil umfasst, wobei der gesamte Gewichtsanteil an tierischem Bestandteil, der in dem auf tierischem Bestandteil basierenden Material vorhanden ist, größer ist als jedweder einzelne nicht-tierische Bestandteil, und wobei das aromatisierte Material ein pflanzenbasiertes Material ist, das einen Pflanzenbestandteil und einen Aromabestandteil umfasst.

11. Verzehrbares Haustier-Kaustück nach Anspruch 10, wobei jedes von dem extrudierten, pflanzenbasierten Röhrenteil hoher Dichte, dem Teil mit pflanzenbasiertem, zelligem Material niedriger Dichte und dem Teil mit verzehrbarem Material dem fertigen Produkt seine jeweils unterschiedliche Funktion verleiht oder jedes von dem extrudierten, pflanzenbasierten Plattenteil hoher Dichte, dem Teil mit pflanzenbasiertem, zelligem Material niedriger Dichte und dem Teil mit verzehrbarem Material dem fertigen Produkt seine jeweils unterschiedliche Funktion verleiht.

## Revendications

1. Aliment à mâcher comestible pour animaux domestiques, comprenant :
un élément de tube à haute densité à base de plante extrudé étant un élément distinct ou un élément de feuille à haute densité à base de plante extrudé étant un élément distinct, dans lequel ledit élément de tube à haute densité à base de plante extrudé comprend au moins 20 % d'amidon de plante en poids sur une base alimentaire ou sur une base en matière sèche, ledit élément de feuille à haute densité à base de plante extrudé comprenant au moins 20 % d'amidon de plante en poids sur une base alimentaire ou sur une base de matière sèche ; et
un élément de matériau à basse densité cellulaire étant un élément distinct, ledit élément de matériau à basse densité cellulaire comprenant de nombreuses bulles de gaz interspersées dans le matériau, ledit élément de matériau à basse densité cellulaire étant formé par un processus d'extrusion ou un processus d'injection,
dans lequel la masse volumique dudit élément de tube à haute densité à base de plante extrudé est au moins 10 % plus grande que celle dudit élément de matériau à basse densité cellulaire, dans lequel ledit élément de tube à haute densité à base de plante extrudé est un long objet creux, dans lequel la masse volumique dudit élément de feuille à haute densité à base de plante extrudé est au moins 10 % plus grande que celle dudit élément de matériau à basse densité cellulaire, dans lequel ledit élément de tube à haute densité à base de plante extrudé et ledit matériau à basse densité cellulaire sont des éléments distincts pour former un produit final dudit aliment à mâcher comestible pour animaux domestiques ensemble, dans lequel ledit élément de tube à haute densité à base de plante extrudé et ledit élément de matériau à basse densité cellulaire sont assemblés ensemble dans une relation prédéterminée, dans lequel ledit élément de feuille à haute densité à base de plante extrudé et ledit élément de matériau à basse densité cellulaire sont des éléments distincts pour former un produit final dudit aliment à mâcher comestible pour animaux domestiques ensemble, dans lequel ledit élément de feuille à haute densité à base de plante extrudé et ledit élément de matériau à basse densité cellulaire sont assemblés ensemble dans une relation prédéterminée.

2. Aliment à mâcher comestible pur animaux domestiques selon la revendication 1, dans lequel
ledit élément de matériau à basse densité cellulaire est un élément de matériau de basse densité cellulaire à base de plantes.

3. Aliment à mâcher comestible pour animaux domestiques, selon la revendication 2, dans lequel
ledit élément de tube à haute densité à base de plante extrudé comprend essentiellement au moins 50 % d'ingrédient de plante en poids ou ledit élément de feuille à haute densité à base de plante extrudé comprend essentiellement au moins 50 % d'ingrédient de plante en poids et ledit élément de matériau à basse densité cellulaire à base de plante comprenant essentiellement au moins 50 % d'ingrédient de plante en poids.

4. Aliment à mâcher comestible pour animaux domestiques, selon l'une quelconque des revendications 2 et 3, dans lequel
l'épaisseur de paroi dudit élément de tube à mâcher à haute densité à base de plante extrudé est essentiellement homogène dans l'ensemble du matériau ou l'épaisseur dudit élément de feuille à mâcher à haute densité à base de plante extrudé est essentiellement homogène dans l'ensemble du matériau, dans lequel la masse volumique dudit élément de tube à mâcher à haute densité à base de plante extrudé se situe dans la plage allant de 0,8 g/cm³ à 2 g/cm³ ou la masse volumique de la feuille à mâcher à haute densité à base de plante extrudé se situe dans la plage de 0,8 g/cm³ à 2 g/cm³ et dans lequel la masse volumique dudit élément à basse densité cellulaire à base de plante se situe dans la plage allant de 0,15 g/cm³ à 1 g/cm³.

5. Aliment à mâcher comestible pour animaux domestiques, selon l'une quelconque des revendications 2, 3 et 4, dans lequel
ledit élément de tube à haute densité à base de plante extrudé est formé à partir d'un premier composite à base d'amidon ou ledit élément de feuille à haute densité à base de plante extrudé est formé à partir d'un premier composite à base d'amidon, situe ledit premier composite à base d'amidon comprend un ingrédient d'amidon et un ingrédient d'agent humectant, situe ledit ingrédient d'amidon dudit premier composite à base d'amidon est choisi dans le groupe constitué par : l'amidon de pomme de terre, l'amidon de patate douce, l'amidon d'haricot mungo, l'amidon de blé, l'amidon de maïs, l'amidon de tapioca, l'amidon de riz, et l'amidon de pois, dans lequel ledit élément de matériau à basse densité cellulaire à base de plante est formé d'un second composite à base d'amidon, dans lequel ledit second composite à base d'amidon comprend un ingrédient d'amidon et un ingrédient d'agent humectant et dans lequel ledit amidon dudit second composite à base d'amidon est choisi dans le groupe constitué par : l'amidon de pomme de terre, l'amidon de patate douce, l'amidon d'haricot mungo, l'amidon de blé, l'amidon de maïs, l'amidon de tapioca, l'amidon de riz, et l'amidon de pois.

6. Aliment à mâcher comestible pour animaux domestiques, selon l'une quelconque des revendications 2, 3, 4 et 5, dans lequel
ledit élément de matériau à basse densité cellulaire à base de plante est enroulé par ledit élément de tube à haute densité à base de plante extrudé ou ledit élément de matériau à basse densité cellulaire à base de plante est enroulé par ledit élément de feuille à haute densité à base de plante extrudé, dans lequel au moins une partie dudit élément de matériau à basse densité cellulaire à base de plante est recouverte par l'élément de tube à haute densité à base de plante extrudé sans exposition ou au moins une partie de l'élément de matériau à basse densité cellulaire à base de plante est recouverte par l'élément de feuille à haute densité à base de plante extrudé sans exposition, dans lequel la proportion dudit élément de tube à haute densité à base de plante extrudé audit élément de matériau à basse densité cellulaire à base de plante se situe dans la plage comprise entre 1:20 et 30:1 en poids dans le produit fini ou la proportion dudit élément de feuille à haute densité à base de plante extrudé audit élément de matériau à basse densité cellulaire à base de plante se situe dans la plage comprise entre 1:20 et 30:1 en poids dans le produit fini, dans lequel la forme présentée de section transversale dudit élément de tube à haute densité à base de plante extrudé est choisie dans le groupe constitué par : une forme ronde, une forme ovale, une forme rectangulaire et dans lequel l'épaisseur de paroi moyenne dudit élément de tube à haute densité à base de plante extrudé se situe dans la plage allant de 0,3 mm à 10 mm ou l'épaisseur moyenne dudit élément de feuille à haute densité à base de plante extrudé se situe dans la plage allant de 0,3 mm à 10 mm.

7. Aliment à mâcher comestible pour animaux domestiques, selon l'une quelconque des revendications 1, 2, 3, 4, 5 et 6, comprenant en outre :
un élément de matériau comestible, dans lequel ledit élément de matériau comestible est enroulé par ledit élément de matériau à basse densité cellulaire et dans lequel au moins une partie dudit élément de matériau comestible est recouvert par ledit élément de matériau à basse densité cellulaire sans exposition et dans lequel ledit élément de matériau à basse densité cellulaire est un élément de matériau à basse densité cellulaire à base de plante.

8. Aliment à mâcher comestible pour animaux domestiques, selon la revendication 7, dans lequel
ledit élément de matériau comestible est formé à partir d'un matériau à base d'ingrédient animal ou d'un matériau à saveur, dans lequel ledit matériau à base d'ingrédient animal comprend essentiellement au moins 10 % d'ingrédient animal en poids, dans lequel la proportion de l'ingrédient animal totale en poids existant dans ledit matériau à base d'ingrédient animal est plus grande qu'un quelconque simple ingrédient non animal et dans lequel ledit matériau à saveur est un matériau à base de plante comprenant un ingrédient de plante et un ingrédient de saveur.

9. Aliment à mâcher comestible pour animaux domestiques, selon l'une quelconque des revendications 7 et 8, dans lequel
chacun dudit élément de tube à haute densité à base de plante extrudé ou dudit élément de feuille à haute densité à base de plante extrudé, dudit élément de matériau à basse densité cellulaire à base de plante et dudit élément de matériau comestible fournissent leur fonction différente distinctement respectivement au produit fini, dans lequel ledit élément de matériau comestible est positionné dans ledit élément de matériau à basse densité cellulaire à base de plante par un processus de co-extrusion et dans lequel ledit élément de matériau à basse densité cellulaire à base de plante et ledit élément de matériau comestible ensemble forment un élément de matériau composite co-extrudé.

10. Aliment à mâcher comestible pour animaux domestiques, selon l'une quelconque des revendications 1, 2, 3, 4 et 5, comprenant en outre :
un élément de matériau comestible, dans lequel ledit élément de matériau comestible est enroulé par ledit élément de tube à haute densité à base de plante extrudé et ledit élément de matériau à basse densité cellulaire ou ledit élément de matériau comestible est enroulé par ledit élément de feuille à haute densité à base de plante extrudé et ledit élément de matériau à basse densité cellulaire, dans lequel au moins une partie de l'élément de matériau comestible est recouvert par ledit élément de matériau de tube à haute densité à base de plante extrudé et ledit élément de matériau à basse densité cellulaire sans exposition ou au moins une partie dudit élément de matériau comestible est recouverte par ledit élément de feuille à haute densité à base de plante extrudé et ledit élément de matériau à basse densité cellulaire sans exposition, dans lequel ledit élément de matériau comestible est formé à partir d'un matériau à base d'ingrédient animal ou d'un matériau à saveur, dans lequel ledit matériau à base d'ingrédient animal comprend essentiellement au moins 10 % d'ingrédient animal en poids, dans lequel la proportion d'ingrédient animal totale en poids existant dans ledit matériau à base d'ingrédient animal est plus grande qu'un quelconque simple ingrédient non animal et dans lequel ledit matériau à saveur est un matériau à base de plante comprenant un ingrédient de plante et un ingrédient de saveur.

11. Aliment à mâcher comestible pour animaux domestiques, selon l'une quelconque de la revendication 10, dans lequel
chacun dudit élément de tube à haute densité à base de plante extrudé, dudit élément de matériau à basse densité cellulaire à base de plante et dudit élément de matériau comestible fournissent leur fonction différente respectivement au produit fini ou chacun dudit élément de feuille à haute densité à base de plante extrudé, dudit élément de matériau à basse densité cellulaire à base de plante et dudit élément de matériau comestible fournissent leur fonction différente respectivement au produit fini..
